# EUROPEAN PATENT SPECIFICATION

(11) **EP 1 031 395 B1**
(45) Date of publication and mention of the grant of the patent: **17.11.2004**
(21) Application number: 99830786.2
(22) Date of filing: 21.12.1999
(51) Int. Cl.: B23D 51/16, A01G 3/08

(54) **Reciprocating saw for cutting branches**
Motorisierte Säge mit hin- und hergehendem Sägeblatt zum Schneiden von Ästen
Scie motorisée alternative pour couper des branches

(30) Priority: 22.02.1999 IT FG990003
(43) Date of publication of application: 30.08.2000
(73) Proprietor: Cecchi, Marco, 71100 Foggia (IT); Cecchi, Daniela, 71100 Foggia (IT)
(72) Inventor: Cecchi, Marco, 71100 Foggia (IT); Cecchi, Daniela, 71100 Foggia (IT)
(74) Representative: Papa, Elisabetta

(56) References cited:
- WO-A-99/41051
- BE-A- 884 632
- DE-A- 3 722 542
- DE-C- 77 566
- FR-A- 1 139 951
- US-A- 1 492 721
- US-A- 3 834 019
- US-A- 4 280 276
- US-A- 4 294 012
- US-A- 4 876 490

## Description

The present invention relates to a cutting device for branches and the like. In particular, it relates to a cutting device of the type comprising a chassis member, a cutting tool reciprocating with respect to the chassis member and means for driving the reciprocating cutting tool.

In the field of the machines for cutting branches, shrubs and the like, several cutting devices are known to the art. These devices comprise a chassis member and a cutting tool, typically saw-toothed, reciprocating on a guide, or on slideways, with respect to the chassis member.

The cutting tool is typically operated by means of an electric motor or an explosion engine, with a suitable transmission system interposed therebetween. Such transmission system generally provides a mechanism made of a crank, a rod rotatably connected to such crank and a guide for the reciprocating cutting tool. Such guide also supports the reciprocating cutting tool with respect to the chassis member. During operation, the aforesaid crank is driven by the electric motor and transmits the motion to the rod. Such rod is in turn rotatably connected to the cutting device. The latter is constrained to slide within the aforesaid guide, and therefore, actuated by the rod, it reciprocates within the guide itself according to rectilinear path.

Moreover, the cutting devices for branches and the like of the known art often have a movable protecting cover of the cutting tool, apt to cover the saw portions of the cutting tool in non-operative periods.

The aforedescribed cutting devices for branches and the like of the known art have some relevant drawbacks.

The main drawback lies in the fact that the motion of the cutting tool is easily blocked by the presence of cutting debris such as sawings and the like that accumulate during operation. This is due to the fact that, as mentioned above, the cutting tool slides on guides or slideways, that are easily clogged up by the aforementioned debris.

Another drawback of the aforedescribed devices of the known art lies in the fact that the sliding motion of the cutting tool onto the guide entails considerable friction, implying, e.g., an overheating of the cutting tool itself.

FR 1 139 951 to Lebeau, which represents the closest prior art, describes a sawing device which partially solves the above problems, having an articulated quadrilateral mechanism interposed between an electric motor and the actual sawing cutting tool. FR 1 139 951 also discloses a shielding means which surrounds a reciprocating tool, and which is fixed to the housing to permanently shield a median portion of the reciprocating tool.

The technical problem underlying the present invention is that of providing a cutting device for branches and the like allowing the cutting of large as well as middle and small branches.

Such problem is overcome by a cutting device for branches and the like according to claim 1.

According to the same inventive concept, the present invention further provides a cutting kit for branches and the like, comprising a cutting device as above specified, a battery for powering said means for driving of said device and a pouch for housing said battery.

The present invention provides several relevant advantages.

The main advantage lies in the fact that the aforesaid first and second arm permit to avoid the use of traditional guides or slideways for supporting the cutting tool. Therefore, the problem of the accumulation of debris blocking the motion of the cutting tool itself is overcome. Moreover, the use of arms rotatably connected both to the chassis member and to the reciprocating cutting tool permits a remarkable friction reduction with respect to the use of guides or slideways of the known art.

Other advantages, features and operation steps of the present invention will be made apparent in the detailed description of some embodiments thereof, given by way of example and not for limitative purposes. Reference will be made to the figures of the annexed drawings, wherein:
Figure 1 is a partially exploded perspective view of an embodiment of the cutting device for branches and the like according to the present invention;
Figure 2 is a perspective view of the cutting device of Fig. 1 in a fully assembled condition thereof;
Figure 3 shows the cutting device of Fig. 1 in a first operative configuration;
Figure 4 shows the cutting device of Fig. 1 in a non operative configuration thereof; and
Figure 5 shows the cutting device of Fig. 1 while in use in a second operative configuration thereof.

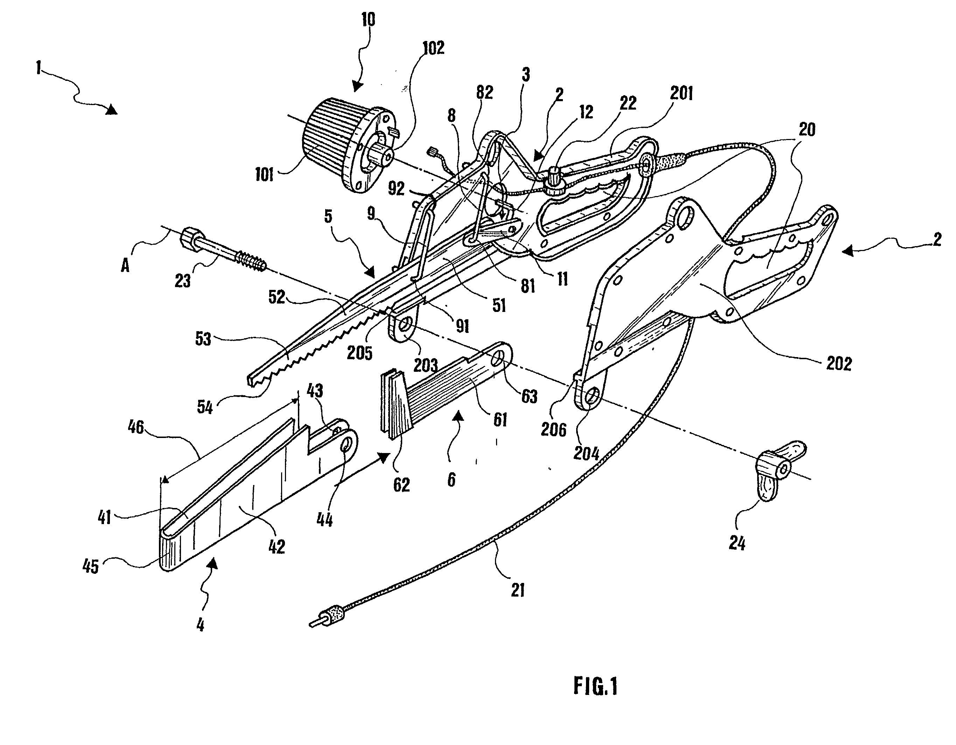

With reference to Figure 1, a cutting device 1 for branches and the like comprises a chassis member 2 and a cutting tool 5 reciprocating with respect to the chassis member 2. Such reciprocating cutting tool 5 is driven by means for driving that will be described in detail in the following. The cutting device 1 is further provided with a protecting cover 4 of the reciprocating cutting tool 5, movable with respect to the chassis 2. The cutting device 1 further comprises a first arm 8 and a second arm 9, each rotatably connected at a first end thereof to the reciprocating cutting tool 5 and at a second end thereof to the chassis member 2. As it will be illustrated hereinafter, such rotatable connections to the reciprocating cutting tool 5 of the first and second arm, 8 and 9 respectively, are formed on distinct points, so as to support the reciprocating cutting tool 5 itself with respect to the chassis member 2.

With further reference to Figure 1, in the present embodiment the chassis member 2 is made of two shells, and specifically a first shell 201 and a second shell 202, joined therebetween by means of traditional joining means. Such first shell 201 and second shell 202 have a first eyelet projection 203 and a second eyelet projection 204, respectively. Such first and second eyelet projection 203 and 204 form a hole apt to receive a pin 23. These first and second eyelet projection 203 and 204 are identical and therefore overlappable.

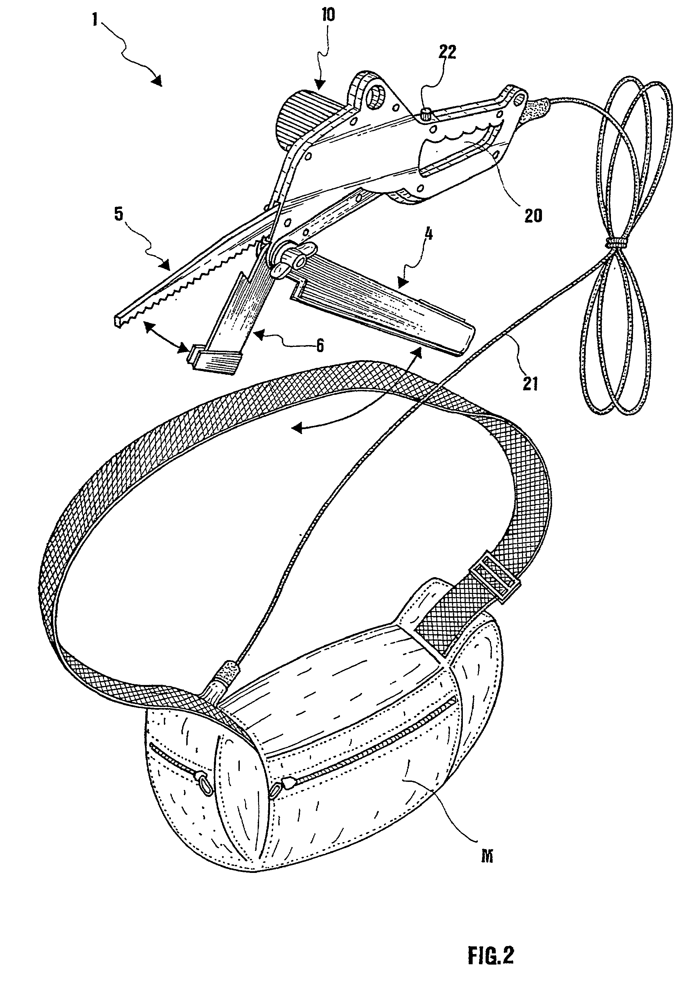

The first arm 8, the second arm 9 and a transmission system 3, that will hereinafter described in detail, are housed between the first and the second shell, 201 and 202 respectively, i.e. inside the chassis member 2. Moreover, such first shell 201 and second shell 202 are shaped in such a manner that, once fixed one to the other, a handgrip 20 is formed in the chassis member 2 (in this respect, see also Figure 2).

In this embodiment, the reciprocating cutting tool 5 is a saw having a serration in a front and lower portion thereof. This saw will hereinafter be referred to as reciprocating saw 5. In order to better understand the operation steps of the cutting device 1, such reciprocating saw 5 is usefully described as comprising a non-serrated rear portion 51 and two serrated portions, i.e. a median portion 52 and a front portion 53, the role of which will be made apparent hereinafter. However, it has to be pointed out that the rear portion 51 of the reciprocating saw 5 is hidden to the user, as it is comprised between the aforesaid first shell 201 and second shell 202 of the chassis member 2.

Of course, the reciprocating cutting tool can also be made in forms differing from the above disclosed one.

Further, in the present embodiment the means for driving comprise an electric motor 10 of traditional type and well-known to a person skilled in the art, comprising a stator 101 and a rotor 102. In particular, the stator 101 is fixed to the chassis member 2, whereas the rotor 102 moves of a continuous rotary motion and is connected to the abovementioned transmission system 3 according to steps them also well-known to a person skilled in the art.

The electric motor 10 is operated by means of an operating button 22. Of course, such operating button 22 will be susceptible of several specific embodiments. In particular, it could provide a system for blocking it in the operation position. Further, the operating button 22 could be arranged internally to the aforesaid handgrip 20 instead of upperly thereto, as it is shown, e.g., in Figure 1, thereby further easing the powering up of the cutting device 1. Further, in alternative embodiments to the abovedisclosed one such operating button 22 could be replaced by other operating means, like e.g. one or more levers.

In this embodiment, the transmission system 3 comprises a crank 12, connected to the rotor 102 of the electric motor 10, and a rod 11, rotatably connected to the crank 12 itself. During the operation of the cutting device 1, the crank 12, driven by the electric motor 10, rotates and transmits the motion to the rod 11.

As already mentioned, said first arm 8 is rotatably connected at a first end thereof 81 onto the rear portion 51 of the reciprocating saw 5. For the sake of simplicity, hereinafter such rotatable connection will be referred to as first articulation, it also indicated with the reference number 81. In the present embodiment the first arm 8 is also rotatably connected to the rod 11 by means of the same articulation 81.

The first arm 8 is also rotatably connected, at a second end 82 thereof, to the chassis member 2, and particularly to the first shell 201 thereof. Analogously to what already said above, such rotatable connection will hereinafter be referred to as second articulation, and it also will be indicated with the reference number 82. The aforesaid second arm 9 is rotatably connected at a first end 91 thereof onto the rear portion 51 of the reciprocating saw 5. Such rotatable connection will hereinafter be referred to as third articulation, and it also will be indicated with the reference number 91. Lastly, the second arm 9 is rotatably connected at a second end 92 thereof onto the chassis member 2, and in particular onto the first shell 201 of the latter. Such rotatable connection will hereinafter be referred to as fourth articulation, and it also will be indicated with the reference number 92.

As it is shown in Fig. 1, in order to implement the above disclosed rotatable connections the first ends 81 and 91 and the second ends 82 and 92, of the first and of the second arm 8 and 9 respectively, can be bent, in order to work as a pin element of the rotatable connections themselves. Further, such ends can be bushed in bronze bushings.

The reciprocating, i.e. cutting, motion, of the reciprocating saw 5 will hereinafter be detailed. The aforesaid rod 11, driven by the crank 12, in turn drives the first arm 8 by means of the first articulation 81. The first arm 8, always by means of the first articulation 81, transmits the motion to the reciprocating saw 5. Thus, in the present embodiment the first arm 8 co-operates with the transmission system 3 for transforming the continuous rotary motion of the electric motor 10 into the reciprocating motion of the reciprocating saw 5.

It has now to be pointed out that the first arm 8, the second arm 9, the portion of the reciprocating saw 5 comprised between the first articulation 81 and the third articulation 91 and the portion of chassis member 2 comprised between the second articulation 82 and the fourth articulation 92 form an articulated quadrilateral mechanism. In particular, in the present embodiment such mechanism is a four-bar linkage. During the operation of the cutting device 1, the reciprocating saw 5 is actuated by the first arm 8, as already said above. The reciprocating saw 5, in turn, actuates the second arm 9 by means of the third articulation 91.

Therefore, thanks to the presence of the first and of the second arm, 8 and 9 respectively, and to the fact that the respective rotatable connections thereof to the reciprocating saw 5 are distinct (first and third articulation, 81 and 91 respectively), the reciprocating saw 5 itself is supported with respect to the chassis 2 with no need for a guide or slideways, unlike in the devices of the known art. Hence, the reciprocating motion of the reciprocating saw 5 is not hindered by the presence of debris deriving from branch cutting, as it cannot block the rotary motion of the first and second arm, 8 and 9 respectively.

Moreover, by virtue of the abovementioned articulated quadrilateral mechanism, the motion of the reciprocating saw 5 does not follow a merely rectilinear path, as is the case for the cutting devices of the known art, although at all times the reciprocating saw 5 itself remains parallel to the same straight line. This provides a smooth cutting onto the branch external surface and a rounded cutting in-depth, apt to reduce friction.

The reciprocating motion of the reciprocating saw 5 is guided by the above described articulated quadrilateral mechanism. In particular, the reciprocating saw 5 moves between a maximally forward position, in which the first and the third articulation 81 and 91 of Fig. 1 are positioned in front of the second and the fourth articulation 82 and 92 respectively, and a minimally forward position, in which the first and the third articulation 81 and 91 of Fig. 1 are positioned at the rear of the second and the fourth articulation 82 and 92, respectively.

Of course, several embodiments alternative to the above disclosed one are possible, both for the means for driving 10 and for the transmission system 3 associated thereto. In particular, the above disclosed transmission system 3 may be replaced by a stepping motor transmitting the motion directly to the first arm 8, at the second articulation 82. Alternatively, a linear motor, e.g. of the so-called «push-pull» type, could be used. In that case, the translational motion of the movable members of such motor could drive the reciprocating saw 5 by means of interposition of a connecting rod. Further, even when using a traditional rotary electric motor, the crank 12 and the rod 11 may be replaced by a different transmission system, based on the use of a cam mechanism.

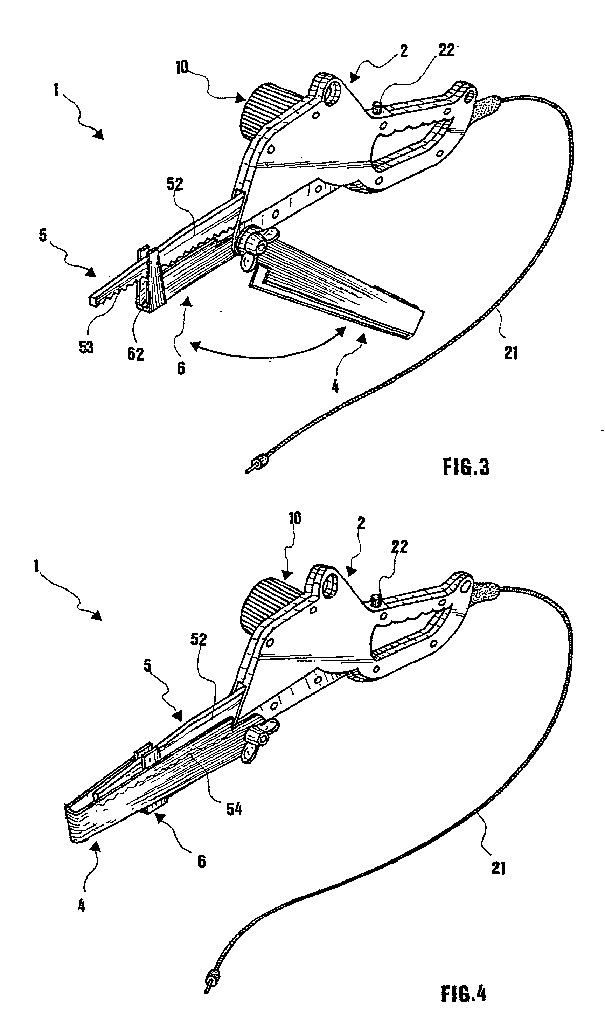

The cutting device 1 further comprises shielding means, globally indicated with 6, for shielding, during operation, the median portion 52 of the reciprocating saw 5, according to steps that will be detailed with reference to Fig. 3. These shielding means 6 comprise, as it is shown in Fig. 1, a bar 61 and a fork 62, located at a front end of said bar 61. The fork 62 has a opening apt to allow the insertion of the median portion 52 of the reciprocating saw 5.

The bar 61 further has, at a rear end thereof, a bar pin seat 63 for the abovementioned pin 23. Such bar pin seat 63 permits the insertion of the pin 23 therethrough for hingedly connecting the shielding means 6 and the chassis member 2 therebetween. Such hinged connection between the shielding means 6 and the chassis member 2 takes place at the eyelet projections 203 and 204 of the latter. In particular, when assembling the cutting device 1 the bar pin seat 63 of the shielding means 6 is arranged between the eyelet projections 203 and 204 of the chassis member 2, so that the pin 23 can be sequentially inserted through the first eyelet projection 203, the bar pin seat 63 and the second eyelet projection 204.

By virtue of the above disclosed hinged connection, the shielding means 6 can be pivoted around an axis A of the pin 23, in order to allow the cutting device 1 to assume various operative configurations, as it will hereinafter be illustrated with reference to Figs. 3, 4 and 5.

The pivoting excursion of the shielding means 6 is limited by first projecting stoppers 205 and 206 formed in the shells 201 and 202, respectively, near the eyelet projections 203 and 204. The role of such first projecting stoppers 205 and 206 will be made further apparent in the following with reference to Figs. 3 and 4.

As already mentioned, the cutting device 1 further comprises the protecting cover 4, for covering the serration 54 of the reciprocating saw 5. The protecting cover 4 consists of a lengthwise opened sleeve member. Such sleeve member, which will hereinafter be indicated with the reference number 4, is provided with a first and a second larger, plane lateral wall, 41, 42 respectively, for receiving the reciprocating saw 5 therebetween in order to hide the serration 54 of the reciprocating saw 5 itself. Such lateral walls 41 and 42 are connected by a smaller frontal wall 45 and by a bottom wall, not shown in the figures. The longitudinal dimension of the sleeve member 4, indicated by an arrow 46 in Fig. 1, is such as to allow the insertion of the reciprocating saw 5 therein even when the latter is in the abovementioned maximally forward position. Moreover, the vertical dimension of such sleeve member 4 is larger than the vertical excursion of the motion of the reciprocating saw 5. This means that the sleeve member 4 can always cover the serration 54, regardless of the position of the reciprocating saw 5.

The transverse dimension of the sleeve member 4 is such as to permit the housing therein not merely of the reciprocating saw 5, but of the abovedescribed shielding means 6 as well.

By virtue of its shape, the sleeve member 4 is apt to be inserted bottomwise on the reciprocating saw 5. The aforesaid bottom wall prevents the serration 54 of the reciprocating saw 5 from coming out from the bottom of the sleeve member once this has been inserted on the reciprocating saw 5 itself.

The first and second lateral wall 41 and 42 of the sleeve member 4 have, at a rear end thereof, respective sleeve pin seats, and specifically a first sleeve pin seat 43 and a second sleeve pin seat 44. Such first and second sleeve pin seat 43 and 44 permit the insertion of the pin 23 therethrough to hingedly connect the sleeve member 4 and the chassis member 2 therebetween. Such hinged connection takes place at the aforesaid first and second eyelet projection 203 and 204 of the chassis member 2, in order to make the sleeve member 4 pivot about the same axis of rotation A of the shielding means 6. Moreover, this hinged connection is made in such a manner that the shielding means 6 are located internally to the sleeve member 4. To this purposes, when assembling the cutting device 1, the first and second sleeve pin seat 43 and 44 of the sleeve member 4 are arranged in such a manner that both the eyelet projections 203 and 204 of the chassis member 2 and the bar pin seat 63 of the shielding means 6 are comprised therebetween. Then, the pin 23 is sequentially inserted through the first sleeve pin seat 43 of the sleeve member 4, the first eyelet projection 203 of the chassis member 2, the bar pin seat 63 of the shielding means 6, the second eyelet projection 204 of the chassis member 2, and the second sleeve pin seat 44 of the sleeve member 4. Then the pin 23 is blocked with the chassis member 2 by means of a blocking member 24 of a traditional type, sketched in Fig. 1.

Fig. 2 can be referred to in order to better understand the mutual arrangement of the sleeve member 4 and of the shielding means 6 when the cutting device 1 is fully assembled.

By virtue of the above described hinged connection, the sleeve member 4 can be pivoted about the axis A of the pin 23, in order to make the cutting device assume a non operative or a operative configuration, as it will be described in detail with reference to Figs. 3 and 4.

The rotation of the sleeve member 4 is limited by second projecting stoppers (not shown in the figures), arranged near the sleeve pin seats 43 and 44. Such second projecting stoppers are apt to abut the chassis member 2, and their role, together with that of the first projecting stoppers mentioned with reference to the shielding means 6, will be made apparent with reference to Fig. 4.

In an alternative embodiment, the protecting cover may be separate from the remaining part of the cutting device 1. In that case, the protecting cover could be fixed to the chassis member 2 only at the moment of its insertion around the reciprocating saw 5, e.g. with fixing means of a bayonet type.

With reference to Fig. 2, the electric motor 10 of the cutting device 1 can be power supplied through a cable 21. Such cable 21 can connect the electric motor 10 to a portable battery. Advantageously, such battery will be rechargeable and carried into a pouch M.

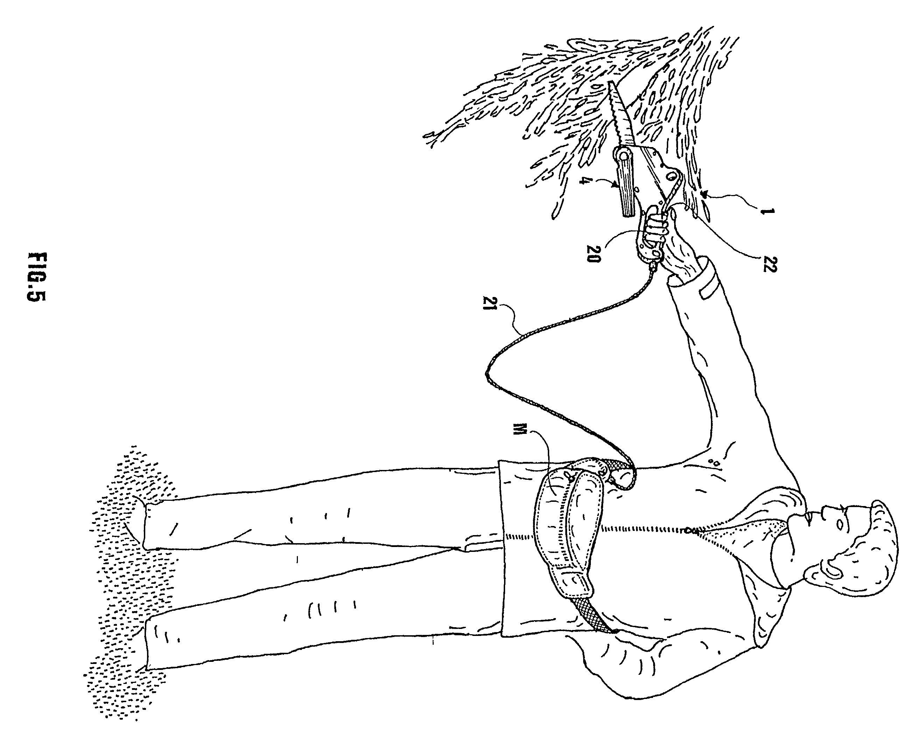

It will be appreciated that this transport and power supply modality of the cutting device 1 emphasises the portability thereof. In particular, as it is shown in Fig. 5, a user can easily use the cutting device 1 for branches and the like by gripping it by the handgrip 20, and move around carrying the relative power supply source in the pouch M, absolutely without being hampered in his/her movements.

Of course, other power sources could be provided as well. For instance, the electric motor 10 could be power supplied by connecting the cable 21 to the battery of a car, tractor or any other agricultural vehicle.

The various possible configurations of the cutting device 1 will hereinafter be described in detail.

Fig. 4 shows the cutting device 1 in a non operative configuration. In such configuration the electric motor 10 is usually inactive, and therefore the reciprocating saw 5 is still. Moreover, the shielding means 6 were pivoted about the axis A of Fig. 1 to displace them below the reciprocating saw 5, so that the median portion 52 of the reciprocating saw 5 itself is inserted into the opening of the fork 62. Analogously, also the sleeve member 4 was pivoted about the axis A, externally to the shielding means 6. This pivoting of the sleeve member 4 permits the insertion of the reciprocating saw 5 therein. Thus, the cutting part of the reciprocating saw 5, i.e. the serration 54, is made inaccessible to the user.

It has to be pointed out that the transverse dimension of the sleeve member 4 and the mutual arrangement of the two hinged connections sleeve member 4 - chassis member 2 and shielding means 6 - chassis member 2 permit also to the shielding means 6 to be housed internally to the sleeve member 4, as it is shown in Fig. 4. This makes the cutting device 1 extremely compact and of little bulkiness in the non operative configuration thereof.

It will therefore be appreciated that the sleeve member 4 performs a double protective function. Firstly, it avoids a possible wounding of the user with the serration 54 of the reciprocating saw 5. Further, the sleeve member protects the reciprocating saw 5 from the atmospheric conditions and from mechanical stresses such as impacts and the like.

A further important advantage of the cutting device 1 is that the sleeve member 4 performs this double protective function even when the reciprocating saw 5 is erroneously started while the cutting device 1 is in its non operative configuration. This significant advantage of the cutting device 1 is provided by two factors. Firstly, as mentioned above, the longitudinal dimension 46 and the vertical dimension of the sleeve member 4 provide the covering of the serration 54 regardless of the position of the reciprocating saw 5. This ensures that the latter does not come out of the sleeve member 4 even when started, or that the sleeve member 4 itself interferes with the motion thereof. Hence, the user is anyhow protected by the sleeve member 4, regardless of the fact that the reciprocating saw 5 is still or performing a cutting motion. Further, the first projecting stoppers 205 and 206 provide for the clockwise pivoting of the shielding means 6 about the axis A to stop before it abuts the reciprocating saw 5. The second projecting stoppers of the sleeve member 4 perform an analogous function with respect to the pivoting of the sleeve member 4 itself. Therefore, there is no risk of interference between the reciprocating saw 5 and the other components of the cutting device 1. This further protects the user and avoids the risk of damages to the reciprocating saw 5 as well as to the cutting device 1 as a whole.

Hereinafter, two possible operative configurations of the cutting device 1 will be described.

With reference to Fig. 3, in order to cut branches and the like, the user first of all releases the reciprocating saw 5 from the sleeve member 4. This can easily be carried out by pivoting the sleeve member 4 counterclockwise of about 180 degrees, in order to have it abutting under the chassis member 2. Then, the user operates the cutting device 1 by means of the operating button 22. In this way, the cutting device 1 assumes a first operative configuration, in which the median portion 52 of the reciprocating saw 5 is located into the opening fork 62 of the shielding means 6. Therefore, such saw median portion 52 is shielded, i.e. the shielding means 6 avoid its coming into contact with the branches to be cut. Thus, the median portion 52 of the reciprocating saw 5 does not cooperate to the cutting, although it is obviously driven by the electric motor 10. This first operative configuration proves useful for the user in cutting small branches.

Instead, referring also to Fig. 5, in order to cut larger branches, the user will need to use the entire useful length of the reciprocating saw 5, i.e. both the serrated saw median and front portion 52, 53. For this purpose, prior to operate the cutting device 1 by means of the operating button 22, the user pivots the shielding means 6 counterclockwise for about 180 degrees, in order to make them release the median portion 52 of the reciprocating saw 5 and abut under the chassis member 2, within the sleeve member 4. In this way, the device 1 assumes a second operative configuration, shown in Fig. 5. It has to be pointed out that, in this second operative configuration, the position of the sleeve member 4 and of the shielding means 6 under the chassis member 2 provides that they do not even slightly hamper neither the user's motions, nor the cutting.

It will be appreciated from the what disclosed above that the shielding means makes the cutting device extremely versatile. In particular, they allow the use of a single cutting device for cutting large, as well as middle and small branches. This provides a significant advantage with respect to the cutting devices of the known art, which need to be used concomitantly to shears or scissors for the cutting of small branches.

The cutting device according to the invention, by virtue of the hereto mentioned properties, is suitable for the pruning of a wide range of trees, and particularly suitable for the pruning of olive trees.

Of course, the shielding means are susceptible of several embodiments alternative to those described up to now. For instance, it may comprise a retractable member sliding onto a slideway or onto a guide blocked with the chassis member. In this way, the length of the saw portion to be shielded might be adjustable as well.

The present invention has hereto been disclosed with reference to preferred embodiments thereof. It is understood that there may be other embodiments thereof, all however comprised within the protective scope of the annexed claims.

## Claims

1. A cutting device (1) for branches and the like, comprising:
- a chassis member (2),
- a cutting tool (5) reciprocating with respect to said chassis member (2),
- means for driving (10) said reciprocating cutting tool (5),
- a first arm (8) and a second arm (9), each of said first (8) and second (9) arm being rotatably connected at a first end thereof (81, 91) to said reciprocating cutting tool (5), and at a second end thereof (82, 92) to said chassis member (2), wherein said rotatable connections (81, 91) of said first (8) and second arm (9) to said reciprocating cutting tool (5) are formed on distinct points for supporting said reciprocating cutting tool (5) with respect to said chassis member (2), and shielding means (6) apt to shield a median portion (52) of said reciprocating cutting tool (5), so that said median portion (52) does not cooperate to the cutting, wherein said shielding means (6) comprises a bar (61)
**characterised in that** it also comprises a movable protecting cover (4) for covering said reciprocating cutting tool (5), and wherein said bar (61) is provided with a fork (62) at one end thereof, said fork (62) having an opening for permitting a releasable insertion of said median portion (52) of said reciprocating cutting tool (5).

2. The device (1) according to claim 1, wherein said shielding means (6) is hingedly connected to said chassis member (2) so that said device (1) assumes a first operative configuration, wherein said shielding means (6) are pivoted below said reciprocating cutting tool (5) and said median portion (52) of said reciprocating cutting tool (5) is inserted in said opening of said fork (62), and a second operative configuration, wherein said shielding means (6) abut said chassis member (2) and said median portion (52) of said cutting tool (5) is free and co-operates to the cutting.

3. The device (1) according to the preceding claim, wherein said bar (61) has, at one end thereof opposed to said fork (62), a bar pin seat (63) for making said hinged connection of said shielding means (6) to said chassis member (2).

4. The device (1) according to claim 2 or 3, wherein said chassis member (2) comprises first projecting stoppers (205, 206), apt to abut said shielding means (6) when said device (1) assumes said first operative configuration.

5. The device (1) according to any of the preceding claims, wherein said first arm (8), said second arm (9), said reciprocating cutting tool (5) and said chassis member (2) make an articulated quadrilateral mechanism.

6. The device (1) according to the preceding claim, wherein said first arm (8), said second arm (9), said reciprocating cutting tool (5) and said chassis member (2) make a four-bar linkage mechanism.

7. The device (1) according to any of the preceding claims, wherein said means for driving comprise a rotary electric motor (10).

8. The device (1) according to the preceding claim, comprising a transmission system (3) for transforming the rotary motion of said electric motor (10) into the reciprocating motion of said reciprocating cutting tool (5), said transmission system (3) comprising a crank (12), connected to said electric motor (10), and a rod (11), rotatably connected to said crank (12).

9. The device (1) according to the preceding claim, wherein said first arm (8) is rotatably connected, at said first end (81), to said rod (11), for transmitting the rotary motion of said electric motor (10) to said reciprocating cutting tool (5).

10. The device (1) according to any of the preceding claims, wherein said protecting cover (4) is hingedly connected to said chassis member (2), so that said device (1) assumes a non operative configuration, wherein said protecting cover (4) is pivoted for covering said reciprocating cutting tool (5), and an operative configuration, wherein said protecting cover (4) abuts said chassis member (2).

11. The device (1) according to any of the preceding claims, wherein said protecting cover comprises a sleeve member (4) lengthwise opened for receiving said reciprocating cutting tool (5), the dimensions of said sleeve member (4) being such as to permit the insertion therein of said reciprocating cutting tool (5) for any position assumed by said reciprocating cutting tool (5) in the reciprocating motion thereof.

12. The device (1) according to the preceding claim, wherein and said sleeve member (4) has at least one sleeve pin seat (43, 44) for making a hinged connection of said sleeve member (4) to said chassis member (2), so that said device (1) assumes a non operative configuration, wherein said sleeve member (4) is pivoted for covering said reciprocating cutting tool (5), and a operative configuration, wherein said sleeve member (4) abuts said chassis member (2).

13. The device (1) according to the preceding claim, wherein said sleeve member (4) has a first (43) and a second (44) sleeve pin seat, made on respective lateral walls (41, 42) of said sleeve member (4).

14. The device (1) according to claim 12 or 13, wherein said sleeve member (4) comprises, near said at least one sleeve pin seat (43, 44), second projecting stoppers, apt to abut said chassis member (2) when said device (1) assumes said operative configuration.

15. The device (1) according to claim 10, wherein said chassis member (2) comprises a first (203) and a second (204) eyelet projection, to make said hinged connection of said chassis member (2) to said protecting cover (4).

16. The device (1) according to any one of claims 2 to 4, wherein said chassis member (2) comprises a first (203) and a second (204) eyelet projection, to make said hinged connection of said chassis member (2) to said shielding means (6).

17. The device (1) according to any one of the preceding claims, wherein said protecting cover (4) and said shielding means (6) are hingedly connected to said chassis member (2) about a same axis of rotation (A).

18. The device (1) according to any of the preceding claims, wherein said reciprocating cutting tool comprises a reciprocating saw (5), having in a front and lower portion (52, 53) thereof a serration (54), said reciprocating saw (5) being movable with respect to said chassis member (2) between a maximally forward position and a minimally forward position.

19. The device (1) according to the preceding claim, wherein said rotatable connections (81, 91) of said first (8) and second (9) arm with said reciprocating cutting tool are made at a non serrated portion (51) of said reciprocating saw (5).

20. The device (1) according to any of the preceding claims, wherein said chassis member (2) comprises a handgrip (20), formed thereon.

21. A cutting kit for branches and the like, comprising a cutting device (1) for branches and the like according to any one of the preceding claims, a battery for power supplying said means for driving (10) of said device (1) and a pouch (M) for housing said battery.

## Patentansprüche

1. Schneidvorrichtung (1) für Zweige und dergleichen, die umfasst:
ein Gehäuseelement (2),
ein Schneidwerkzeug (5), das sich in Bezug auf das Gehäuseelement (2) hin- und herbewegt,
eine Einrichtung (10), die das sich hin- und herbewegende Schneidwerkzeug (5) antreibt,
einen ersten Arm (8) und einen zweiten Arm (9), wobei der erste (8) und der zweite (9) Arm an einem ersten Ende derselben (81, 91) drehbar mit dem sich hin- und herbewegenden Schneidwerkzeug (5) und an einem zweiten Ende derselben (82, 92) mit dem Gehäuseelement (2) verbunden sind; und die drehbaren Verbindungen (81, 91) des ersten (8) sowie des zweiten (9) Arms mit dem sich hin- und herbewegenden Schneidwerkzeug (5) an getrennten Punkten ausgebildet sind, um das sich hin- und herbewegende Schneidwerkzeug (5) in Bezug auf das Gehäuseelement (2) zu tragen, und
eine Abschirmeinrichtung (6), die geeignet ist, um einen Mittelabschnitt (52) des sich hin- und herbewegenden Schneidwerkzeugs (5) abzuschirmen, so dass der Mittelabschnitt (52) nicht an dem Schneiden beteiligt ist, wobei die Abschirmeinrichtung (6) eine Schiene (61) umfasst, **dadurch gekennzeichnet, dass** sie des Weiteren eine bewegliche Schutzabdeckung (4) zum Abdecken des sich hin- und herbewegenden Werkzeugs (5) umfasst, und wobei die Schiene (61) mit einer Gabel (62) an einem Ende derselben versehen ist und die Gabel (62) eine Öffnung hat, die ein lösbares Einführen des Mittelabschnitts (52) des sich hin- und herbewegenden Schneidwerkzeugs (5) ermöglicht.

2. Vorrichtung (1) nach Anspruch 1, wobei die Abschirmeinrichtung (6) gelenkig mit dem Gehäuseelement (2) verbunden ist, so dass die Vorrichtung (1) eine erste Funktionsanordnung, in der die Abschirmeinrichtung (6) unter das sich hin- und herbewegende Schneidwerkzeug (5) geschwenkt ist und der Mittelabschnitt (52) des sich hin- und herbewegenden Schneidwerkzeugs in die Öffnung der Gabel (62) eingeführt ist, sowie eine zweite Funktionsanordnung einnimmt, in der die Abschirmeinrichtung (6) an dem Gehäuseelement (2) anliegt, und der Mittelabschnitt (52) des Schneidwerkzeugs (5) frei ist und am Schneiden beteiligt ist.

3. Vorrichtung (1) nach dem vorangehenden Anspruch, wobei die Schiene (61) an einem Ende derselben gegenüber der Gabel (62) eine Schienenbolzen-Aufnahme (63) hat, die die gelenkige Verbindung der Abschirmeinrichtung (6) mit dem Gehäuseelement (2) herstellt.

4. Vorrichtung (1) nach Anspruch 2 oder 3, wobei das Gehäuseelement (2) erste vorstehende Anschläge (205, 206) umfasst, die geeignet sind, um an der Abschirmeinrichtung (6) anzuliegen, wenn die Vorrichtung (1) die erste Funktionsanordnung einnimmt.

5. Vorrichtung (1) nach einem der vorangehenden Ansprüche, wobei der erste Arm (8), der zweite Arm (9), das sich hin- und herbewegende Schneidwerkzeug (5) und das Gehäuseelement (2) einen gelenkigen vierseitigen Mechanismus bilden.

6. Vorrichtung (1) nach dem vorangehenden Anspruch, wobei der erste Arm (8), der zweite Arm (9), das sich hin- und herbewegende Schneidwerkzeug (5) und das Gehäuseelement (2) einen Gelenkviereckmechanismus bilden.

7. Vorrichtung (1) nach einem der vorangehenden Ansprüche, wobei die Einrichtung zum Antreiben einen Dreh-Elektromotor (10) umfasst.

8. Vorrichtung (1) nach dem vorangehenden Anspruch, die ein Getriebesystem (3) zum Umwandeln der Drehbewegung des Elektromotors (10) in die Hin- und Herbewegung des sich hin- und herbewegenden Schneidwerkzeugs (5) umfasst, wobei das Getriebesystem (3) eine Kurbel (12), die mit dem Elektromotor (10) verbunden ist, und eine Stange (11) umfasst, die drehbar mit der Kurbel (12) verbunden ist.

9. Vorrichtung (1) nach dem vorangehenden Anspruch, wobei der erste Arm (8) an dem ersten Ende (81) drehbar mit der Stange (11) verbunden ist, um die Drehbewegung des Elektromotors (10) auf das sich hin- und herbewegende Schneidwerkzeug (5) zu übertragen.

10. Vorrichtung (1) nach einem der vorangehenden Ansprüche, wobei die Schutzabdeckung (4) gelenkig mit dem Gehäuseelement (2) verbunden ist, so dass die Vorrichtung (1) eine Nichtfunktionsanordnung, in der die Schutzabdeckung (4) so geschwenkt ist, dass sie das sich hin- und herbewegende Schneidwerkzeug (5) abdeckt, sowie eine Funktionsanordnung einnimmt, in der die Schutzabdeckung (4) an dem Gehäuseelement (2) anliegt.

11. Vorrichtung (1) nach einem der vorangehenden Ansprüche, wobei die Schutzabdeckung ein Hülsenelement (4) umfasst, das in Längsrichtung zum Aufnehmen des sich hin- und herbewegenden Schneidwerkzeugs (5) geöffnet ist, wobei die Abmessungen des Hülsenelementes (4) so sind, dass sie das Einführen des sich hin- und herbewegenden Schneidwerkzeugs (5) in jeder Position, die von dem sich hin- und herbewegenden Schneidwerkzeug (5) bei der Hin- und Herbewegung desselben eingenommen wird, ermöglicht.

12. Vorrichtung (1) nach dem vorangehenden Anspruch, wobei das Hülsenelement (4) wenigstens eine Hülsenbolzen-Aufnahme (34, 44) hat, die eine gelenkige Verbindung des Hülsenelementes (4) mit dem Gehäuseelement (2) herstellt, so dass die Vorrichtung (4) eine Nichtfunktionsanordnung, in der das Hülsenelement (4) so geschwenkt ist, dass es das sich hin- und herbewegende Schneidwerkzeug (5) abdeckt, und eine Funktionsanordnung einnimmt, in der das Hülsenelement (4) an dem Gehäuseelement (2) anliegt.

13. Vorrichtung (1) nach dem vorangehenden Anspruch, wobei das Hülsenelement (4) eine erste (43) und eine zweite (44) Hülsenbolzen-Aufnahme hat, die an entsprechenden Seitenwänden (41, 42) des Hülsenelementes (4) ausgebildet sind.

14. Vorrichtung (1) nach Anspruch 12 oder 13, wobei das Hülsenelement (4) in der Nähe wenigstens einer Hülsenbolzen-Aufnahme (43, 44) zweite vorstehende Anschläge umfasst, die geeignet sind, um an dem Gehäuseelement (2) anzuliegen, wenn die Vorrichtung (1) die Funktionsanordnung einnimmt.

15. Vorrichtung (1) nach Anspruch 10, wobei das Gehäuseelement (2) einen ersten (203) und einen zweiten (204) Ösenvorsprung umfasst, um die Gelenkverbindung des Gehäuseelementes (2) mit der Schutzabdeckung (4) herzustellen.

16. Vorrichtung (1) nach einem der Ansprüche 2 bis 4, wobei das Gehäuseelement (2) einen ersten (203) und einen zweiten (204) Ösenvorsprung umfasst, um die Gelenkverbindung des Gehäuseelementes (2) mit der Abschirmeinrichtung (6) herzustellen.

17. Vorrichtung (1) nach einem der vorangehenden Ansprüche, wobei die Schutzabdeckung (4) und die Abschirmeinrichtung (6) um eine gleiche Drehachse (A) herum gelenkig mit dem Gehäuseelement (2) verbunden sind.

18. Vorrichtung (1) nach einem der vorangehenden Ansprüche, wobei das sich hin- und herbewegende Schneidwerkzeug eine sich hin- und herbewegende Säge (5) umfasst, die in einem vorderen unteren Abschnitt (52, 53) eine Verzahnung (54) aufweist, und die sich hin- und herbewegende Säge (5) in Bezug auf das Gehäuseelement (2) zwischen einer am meisten vom befindlichen Position und einer am wenigsten vom befindlichen Position bewegt werden kann.

19. Vorrichtung (1) nach dem vorangehenden Anspruch, wobei die drehbaren Verbindungen (81, 91) des ersten (8) und des zweiten (9) Arms mit dem sich hin- und herbewegenden Schneidwerkzeug an einem nicht verzahnten Abschnitt (51) der sich hin- und herbewegenden Säge (5) hergestellt sind.

20. Vorrichtung (1) nach einem der vorangehenden Ansprüche, wobei das Gehäuseelement (2) einen daran ausgebildeten Handgriff (20) umfasst.

21. Schneidausrüstung für Zweige und dergleichen, die eine Schneidvorrichtung (1) für Zweige und dergleichen nach einem der vorangehenden Ansprüche, eine Batterie zur Stromversorgung der Einrichtung (10) zum Antreiben der Vorrichtung (1) sowie eine Tasche (M) zum Aufnehmen der Batterie umfasst.

## Revendications

1. Appareil de coupe (1) pour des branches et analogues, comportant :
- un élément de châssis (2),
- un outil de coupe (5) réalisant un mouvement de va-et-vient par rapport audit élément de châssis (2),
des moyens pour entraîner (10) ledit outil de coupe animé d'un mouvement de va-et-vient (5),
- un premier bras (8) et un second bras (9), chacun desdits premier (8) et second (9) bras étant relié de manière rotative sur une première extrémité de ceux-ci (81, 91) audit outil de coupe animé d'un mouvement de va-et-vient (5), et sur une seconde extrémité de ceux-ci (82, 92) audit élément de châssis (2), dans lequel lesdites liaisons rotatives (81, 91) entre lesdits premier (8) et second bras (9) et ledit outil de coupe animé d'un mouvement de va-et-vient (5) sont formées en des points distincts pour supporter ledit outil de coupe animé d'un mouvement de va-et-vient (5) par rapport audit élément de châssis (2), et
- des moyens de protection (6) adaptés pour protéger une partie médiane (52) dudit outil de coupe animé d'un mouvement de va-et-vient (5), de sorte que ladite partie médiane (52) ne participe pas à la coupe, dans lequel lesdits moyens de protection (6) comportent une barre (61),
**caractérisé en ce qu'**il comporte également un cache de protection mobile (4) pour recouvrir ledit outil de coupe animé d'un mouvement de va-et-vient (5) et dans lequel ladite barre (61) comporte une fourchette (62) sur une extrémité de celle-ci, ladite fourchette (62) ayant une ouverture pour permettre une insertion pouvant être libérée de ladite partie médiane (52) dudit outil de coupe animé d'un mouvement de va-et-vient (5).

2. Appareil (1) selon la revendication 1, dans lequel lesdits moyens de protection (6) sont reliés de manière articulée audit élément de châssis (2) de sorte que ledit appareil (1) prend une première configuration opérationnelle, dans laquelle lesdits moyens de protection (6) pivotent au-dessous dudit outil de coupe animé d'un mouvement de va-et-vient (5) et ladite partie médiane (52) dudit outil de coupe animé d'un mouvement de va-et-vient (5) est insérée dans ladite ouverture de ladite fourchette (62), et une seconde configuration opérationnelle, dans laquelle lesdits moyens de protection (6) viennent en butée contre ledit élément de châssis (2) et ladite partie médiane (52) dudit outil de coupe (5) est libre et participe à la coupe.

3. Appareil (1) selon la revendication précédente, dans lequel ladite barre (61) comporte, sur une extrémité de celle-ci opposée à ladite fourchette (62), un support d'axe de barre (63) pour réaliser ladite liaison articulée entre lesdits moyens de protection (6) et ledit élément de châssis (2).

4. Appareil (1) selon la revendication 2 ou 3, dans lequel ledit élément de châssis (2) comporte des premières butées en saillie (205, 206), adaptées pour mettre en butée lesdits moyens de protection (6) lorsque ledit appareil (1) prend ladite première configuration opérationnelle.

5. Appareil (1) selon l'une quelconque des revendications précédentes, dans lequel ledit premier bras (8), ledit second bras (9), ledit outil de coupe animé d'un mouvement de va-et-vient (5) et ledit élément de châssis (5) forment un mécanisme quadrilatère articulé.

6. Appareil (1) selon la revendication précédente, dans lequel ledit premier bras (8), ledit second bras (9), ledit outil de coupe animé d'un mouvement de va-et-vient (5) et ledit élément de châssis (5) forment un mécanisme de tringlerie à quatre éléments.

7. Appareil (1) selon l'une quelconque des revendications précédentes, dans lequel lesdits moyens d'entraînement comportent un moteur électrique rotatif (10).

8. Appareil (1) selon la revendication précédente, comportant un système de transmission (3) pour transformer le mouvement rotatif dudit moteur électrique (10) pour obtenir le mouvement de va-et-vient dudit outil de coupe animé d'un mouvement de va-et-vient (5), ledit système de transmission (3) comportant une manivelle (12), reliée audit moteur électrique (10), et une tige (11), reliée de manière rotative à ladite manivelle (12).

9. Appareil (1) selon la revendication précédente, dans lequel ledit premier bras (8) est relié de manière rotative, sur ladite première extrémité (81), à ladite tige (11), pour transmettre le mouvement rotatif dudit moteur électrique (10) audit outil de coupe animé d'un mouvement de va-et-vient (5).

10. Appareil (1) selon l'une quelconque des revendications précédentes, dans lequel ledit cache de protection (4) est relié de manière articulée audit élément de châssis (2), de sorte que ledit appareil (1) prend une configuration non opérationnelle, dans laquelle ledit cache de protection (4) pivote pour recouvrir ledit outil de coupe animé d'un mouvement de va-et-vient (5), et une configuration opérationnelle, dans laquelle ledit cache de protection (4) vient en butée contre ledit élément de châssis (2).

11. Appareil (1) selon l'une quelconque des revendications précédentes, dans lequel ledit cache de protection comporte un élément formant enveloppe (4) longitudinalement ouvert pour recevoir ledit outil de coupe animé d'un mouvement de va-et-vient (5), les dimensions dudit élément formant enveloppe (4) permettant l'insertion dans celui-ci dudit outil de coupe animé d'un mouvement de va-et-vient (5) pour toute position prise par ledit outil de coupe animé d'un mouvement de va-et-vient (5) pendant son mouvement de va-et-vient.

12. Appareil (1) selon la revendication précédente, dans lequel ledit élément formant enveloppe (4) a au moins un support d'axe d'enveloppe (43, 44) pour créer une liaison articulée entre ledit élément formant enveloppe (4) et ledit élément de châssis (2), de sorte que ledit appareil (1) prend une configuration non opérationnelle, dans laquelle ledit élément formant enveloppe (4) pivote pour recouvrir ledit outil de coupe animé d'un mouvement de va-et-vient (5), et une configuration opérationnelle, dans laquelle ledit élément formant enveloppe (4) vient en butée contre ledit élément de châssis (2).

13. Appareil (1) selon la revendication précédente, dans lequel ledit élément formant enveloppe (4) comporte un premier (43) et un second (44) support d'axe d'enveloppe, fabriqué sur des parois latérales respectives (41, 42) dudit élément formant enveloppe (4).

14. Appareil (1) selon la revendication 12 ou 13, dans lequel ledit élément formant enveloppe (4) comporte, près dudit au moins un support d'axe d'enveloppe (43, 44), des secondes butées en saillie, adaptées pour mettre en butée ledit élément de châssis (2) lorsque ledit appareil (1) prend ladite configuration opérationnelle.

15. Appareil (1) selon la revendication 10, dans lequel ledit élément de châssis (2) comporte une première (203) et une seconde (204) saillie à oeillet, pour créer ladite liaison articulée entre ledit élément de châssis (2) et ledit cache de protection (4).

16. Appareil (1) selon l'une quelconque des revendications 2 à 4, dans lequel ledit élément de châssis (2) comporte une première (203) et une seconde (204) saillie à oeillet, pour créer ladite liaison articulée entre ledit élément de châssis (2) et lesdits moyens de protection (6).

17. Appareil (1) selon l'une quelconque des revendications précédentes, dans lequel ledit cache de protection (4) et lesdits moyens de protection (6) sont reliés de manière articulée audit élément de châssis (2) autour d'un même axe de rotation (A).

18. Appareil (1) selon l'une quelconque des revendications précédentes, dans lequel ledit outil de coupe animé d'un mouvement de va-et-vient comporte une scie animée d'un mouvement de va-et-vient (5), ayant dans une partie avant et inférieure (52, 53) de celle-ci une dentelure (54), ladite scie animée d'un mouvement de va-et-vient (5) étant mobile par rapport audit élément de châssis (2) entre une position avancée de manière maximale et une position avancée de manière minimale.

19. Appareil (1) selon la revendication précédente, dans lequel lesdites liaisons rotatives (81, 91) entre lesdits premier (8) et second (9) bras et ledit outil de coupe animé d'un mouvement de va-et-vient sont réalisées sur une partie non dentelée (51) de ladite scie animée d'un mouvement de va-et-vient (5).

20. Appareil (1) selon l'une quelconque des revendications précédentes, dans lequel ledit élément de châssis (2) comporte une poignée (20), formée sur celui-ci.

21. Kit de coupe pour des branches et analogues, comportant un appareil de coupe (1) pour des branches et analogues selon l'une quelconque des revendications précédentes, une batterie pour alimenter en courant électrique lesdits moyens d'entraînement (10) dudit appareil (1) et une sacoche (M) pour recevoir ladite batterie.
